# EUROPÄISCHE PATENTSCHRIFT

(11) **EP 3 289 836 B1**
(45) Veröffentlichungstag und Bekanntmachung des Hinweises auf die Patenterteilung: **25.12.2024**
(21) Anmeldenummer: 16723678.5
(22) Anmeldetag: 29.04.2016
(51) Int. Cl.: H05B 47/115, H05B 47/16, H05B 47/19

(54) **VERFAHREN UND SYSTEM ZUR STEUERUNG EINER BELEUCHTUNGSVORRICHTUNG**
METHOD AND SYSTEM FOR IMPROVING LIGHTING CONTROL AND METHOD AND SYSTEM FOR CONTROLLING A LIGHTING DEVICE
PROCÉDÉ ET SYSTÈME D'AMÉLIORATION D'UNE COMMANDE D'ÉCLAIRAGE ET PROCÉDÉ ET SYSTÈME DE COMMANDE D'UN DISPOSITIF D'ÉCLAIRAGE

(30) Priorität: 30.04.2015 DE 102015208002
(43) Veröffentlichungstag der Anmeldung: 07.03.2018
(73) Patentinhaber: Zumtobel Lighting GmbH, 6850 Dornbirn (AT)
(72) Erfinder: JOPPI, Rene, 6850 Dornbirn (AT); MAYR, Gregor, 6974 Gaißau (AT)
(74) Vertreter: Thun, Clemens
(86) Internationale Anmeldenummer: PCT/EP2016/059637
(87) Internationale Veröffentlichungsnummer: WO 2016/174217

(56) Entgegenhaltungen:
- WO-A1-2010/079388
- WO-A1-2013/111134
- WO-A1-99/56262
- DE-A1- 102012 206 691
- DE-U1- 202011 108 475
- US-A1- 2014 052 220

## Beschreibung

Die vorliegende Erfindung betrifft ein Verfahren bzw. ein System zur Steuerung einer Beleuchtungsvorrichtung, bei dem Beleuchtungsinformationen über die von einer Beleuchtungsvorrichtung abgegebene Beleuchtung und Körperdaten einer im Beleuchtungsbereich oder in einem vordefinierten Bereich der Beleuchtungsvorrichtung befindlichen Person erfasst werden. Außerdem betrifft die vorliegende Erfindung ein Verfahren bzw. ein System zur Steuerung einer Beleuchtungsvorrichtung, bei dem Körperdaten einer im Beleuchtungsbereich oder in einem vordefinierten Bereich der Beleuchtungsvorrichtung befindlichen Person erfasst werden.

In vielen verschiedenen Bereichen der Beleuchtungstechnik, wie bspw. der Industrie, Büros, Schulen/Unis und Krankenhäusern, gewinnt das Lichtmanagement bzw. die Steuerung der Beleuchtung immer mehr an Bedeutung. Dabei ist immer häufiger vorgesehen, dass die Beleuchtung abhängig von verschiedenen Faktoren unterschiedlich gesteuert bzw. an- oder abgeschaltet wird. So wird bspw. zur Energieeinsparung eine Tageslichtsteuerung oder eine Steuerung auf Grundlage von Präsenzmeldungen bzw. Anwesenheitsmeldungen verwendet. Eine Tageslichtsteuerung kann daneben auch dazu dienen, möglichst gleichbleibende Lichtverhältnisse in einem Gebäude oder einem Raum über den gesamten Tag zu erreichen.

Ein weiterer Bereich in dem das Lichtmanagement bzw. die Steuerung der Beleuchtung immer mehr an Bedeutung gewinnt, ist die Wirkung des Lichts auf das Wohlbefinden und die Produktivität von Menschen bzw. Personen, die sich im Bereich einer entsprechenden Beleuchtung befinden. Hierbei ist bereits bekannt, dass die Art der Lichtabgabe Einfluss auf den Biorhythmus des Menschen hat, wobei allgemein davon ausgegangen wird, dass bspw. Licht mit einem höheren Blauanteil eine anregende Wirkung hat, während hingegen niedrigere Farbtemperaturen eher beruhigend wirken. Durch die Beeinflussung von Menschen durch die Art der Lichtabgabe können in unterschiedlichen Anwendungsbereichen verschiedene Vorteile erreicht werden. So ist bspw. in der Industrie vorstellbar, dass das Licht eine anregende Wirkung hat und sich dadurch weniger Fehltage und eine höhere Produktivität der Mitarbeiter ergeben, in Büros könnte ein höheres Wohlbefinden und dadurch höhere Produktivität erreicht werden, in Schulen/Unis könnte eine anregende Wirkung und dadurch ein besseres Lernverhalten erzielt werden und in Krankenhäusern könnte dies zur Unterstützung im Heilungsprozess und zu einer beruhigenden Wirkung führen.

Bzgl. der Auswirkungen des Lichts auf das Wohlbefinden und die Produktivität von Menschen bzw. Personen sind bereits mehrere Studien durchgeführt worden, deren Aussagekraft allerdings insofern fraglich ist, dass immer nur eine verhältnismäßig geringe Anzahl von Testpersonen untersucht wurden, da derartige Studien relativ aufwendig sind. Dies liegt u.a. daran, dass eine Stichprobe von Personen mit unterschiedlichem demographischem Hintergrund in ein Labor kommen und deren physiologische Reaktionen gemessen werden müssen. Aufgrund dieses Aufwands werden solche Studien mit einer begrenzten Personenanzahl (maximal ein paar hundert Personen) durchgeführt. Hinzu kommt, dass physiologische Reaktionen wie Stress, Pulsschlag usw. von einer Vielzahl von Faktoren, wie z.B. der Tagesverfassung, beeinflusst wird. Aufgrund der geringen Teilnehmerzahl ist es auch bei bisher bekannten Studien kaum möglich, ein Clustering nach Alter, Geschlecht usw. vorzunehmen.

Die Aussagekraft derartiger Studien ist dementsprechend eher gering und es können nur wenige hilfreiche Informationen hinsichtlich einer optimalen Beleuchtungssteuerung aus den Studien erzielt werden.

Des Weiteren ist auch zu beachten, dass aus derartigen Studien abgeleitete Dimm- und Farbtemperaturverläufe starr in einem System hinterlegt werden und sich nicht anpassen können, bspw. an örtliche Gegebenheiten. Dabei erhält das System auch keine Rückmeldung, ob sich derartige Verläufe positiv auf die entsprechenden Personen auswirken.

Die WO 2010/079388 A1 zeigt ein steuerbares Beleuchtungsnetzwerk, wobei das Beleuchtungsnetzwerk dazu ausgebildet ist basierend auf der Anzahl von Personen eine Beleuchtung zu ändern, wobei weiterhin vorgesehen ist, dass das Beleuchtungsnetzwerk Mittel zum Erkennen von Personen aufweist, wobei weiterhin basierend auf der erkannten Person die Beleuchtung entsprechend zuvor hinterlegter bevorzugter Einstellungswerte der Person geändert werden kann.

In der US 2014/0052220 A1 ist ein Beleuchtungssystem zum Auslösen einer Änderung des zirkadianen Zustands oder des Wohlbefindens eines Säugetiers beschrieben. Das Beleuchtungssystem umfasst hierbei eine steuerbare Lichtquelle und eine Recheneinheit, welche dazu ausgebildet ist, Zustandsinformationen bezüglich des zirkadianen Zustands oder des Wohlbefindens des Säugetiers und Betriebsinformationen eines Lichtsensors zu empfangen, zu vergleichen und basierend auf dem Vergleich die Lichtquelle einzustellen.

Die DE102012206691A1 betrifft ein Straßen- und Wegbeleuchtungssystem mit einer Beleuchtungsvorrichtung, welche eine Projektionseinheit zum Projizieren von Signalen auf eine Projektionsfläche, und ein Kommunikationsmodul, welches derart ausgebildet ist, die Projektionseinheit auf Basis eingehender Eingangssignale zu steuern, aufweist.

Die WO2013111134A1 zeigt eine Beleuchtungseinrichtung, die mit Sensoren oder einem Bildaufnahmegerät und einem logischen Steuergerät gekoppelt ist, wobei die Beleuchtungseinrichtung es ermöglicht, die Beleuchtungsintensität und das Beleuchtungsspektrum entsprechend den sich ändernden Bedürfnissen eines Benutzers zu variieren.

In der WO 1999056262A1 wird ein automatisches Steuerungssystem für Aktoren und Sicherheitseinrichtungen in der Gebäudeautomation beschrieben. Hierbei sendet eine am Handgelenk getragene Sensor- und Sendeeinheit wiederholt in Form von kurzen Telegrammen Nachrichten, die den physiologischen Zustand des Benutzers anzeigen, an ein Empfangs- und Steuergerät, das in einem überwachten Raum entweder als separate Einheit oder als Teil eines zu steuernden Geräts angeordnet ist.

Die DE202011108475U1 gibt ein adaptives Beleuchtungssystem mit einer Erfassungseinheit an, mit der eine oder mehrere extrinsische, also außerhalb des adaptiven Beleuchtungssystems auftretende Größen erfassbar und an eine Auswerte- und Steuereinheit übermittelbar sind, wobei die Auswerte- und Steuereinheit, mit der aus den übermittelten extrinsischen Größen ein Ansteuersignal generierbar und an eine oder mehrere adaptive Lichtquellen übermittelbar ist, und die eine oder mehreren adaptive Lichtquellen, die dazu ausgebildet sind, auf Basis des übermittelten Ansteuersignals eine oder mehrere ihrer Emissionseigenschaften zu variieren.

Insgesamt ergibt sich also die Problematik, dass sich durch die bisherigen Studien kaum vernünftig verwendbare Vorgaben zur Steuerung einer Beleuchtung ergeben, die bei einem Großteil bzw. den meisten Personen eine entsprechende positive Auswirkung auf das Wohlbefinden und die Produktivität hat.

Aufgabe der vorliegenden Erfindung ist es nunmehr, eine Möglichkeit zu schaffen, durch die Auswirkung des Lichts auf das Wohlbefinden und die Produktivität von Menschen positive Effekte zu erzielen.

Die Aufgabe wird durch ein Verfahren zur Steuerung einer Beleuchtungsvorrichtung gemäß Anspruch 1 und einem System zur Steuerung einer Beleuchtungsvorrichtung gemäß Anspruch 6 gelöst. Vorteilhafte Weiterbildungen der Erfindung sind Gegenstand der abhängigen Ansprüche.

Erfindungsgemäß ist ein Verfahren und ein System zur Steuerung einer Beleuchtungsvorrichtung vorgesehen, bei denen Beleuchtungsinformationen über die von einer Beleuchtungsvorrichtung abgegebene Beleuchtung und Körperdaten einer im Beleuchtungsbereich oder in einem vordefinierten Bereich der Beleuchtungsvorrichtung befindlichen Person erfasst werden, wobei die zu einem bestimmten, gleichen Zeitpunkt erfassten Körperdaten und Beleuchtungsinformationen einander zugeordnet werden und an eine Datensammeleinrichtung übermittelt werden. Das System weist hierzu mindestens eine Beleuchtungsvorrichtung, mindestens ein Mittel zur Erfassung von Körperdaten und eine Datensammeleinrichtung auf.

Vorteilhafterweise ist vorgesehen, dass zu mehreren, verschiedenen Zeitpunkten Köperdaten und Beleuchtungsinformationen erfasst und jeweils einander zugeordnet werden und an die Datensammeleinrichtung übermittelt werden, wobei die Beleuchtungsvorrichtung zu den verschiedenen Zeitpunkten jeweils eine andere Beleuchtung abgeben kann.

Vorzugsweise können die Körperdaten mehrerer Personen mit mehreren Mitteln zur Erfassung von Körperdaten erfasst werden, wobei jeder Person ein Mittel zur Erfassung von Körperdaten zugeordnet ist und die Beleuchtungsinformationen der Beleuchtungsvorrichtung jeweils den Körperdaten einer Person zugeordnet werden. Alternativ hierzu können auch mehrere Beleuchtungsvorrichtungen vorgesehen, wobei die Körperdaten der Person den Beleuchtungsinformationen der Beleuchtungsvorrichtung zugeordnet werden in dessen Beleuchtungsbereich bzw. vordefinierten Bereich sich die Person befindet. Ebenso ist es auch möglich, dass Köperdaten und Beleuchtungsinformationen verschiedener Personen und mehrerer Beleuchtungsvorrichtungen erfasst und jeweils einander zugeordnet werden und an die Datensammeleinrichtung übermittelt werden, wobei die Körperdaten einer Person den Beleuchtungsinformationen der Beleuchtungsvorrichtung zugeordnet werden in dessen Beleuchtungsbereich bzw. vordefinierten Bereich sich die Person befindet.

Des Weiteren kann auch vorgesehen sein, dass an die Datensammeleinrichtung weitere Informationen der Person, bspw. Alter oder Geschlecht, übermittelt werden.

Vorteilhafterweise werden die einander zugeordneten Körperdaten und Beleuchtungsinformationen bzw. die einander zugeordneten Körperdaten und Beleuchtungsinformationen und die weiteren Informationen der Person derart ausgewertet, dass sich Informationen über die Auswirkung der Beleuchtung der Beleuchtungsvorrichtung auf das Wohlbefinden bzw. die Produktivität der Person ergeben, wobei die Datensammeleinrichtung dazu ausgebildet sein kann, die einander zugeordneten Körperdaten und Beleuchtungsinformationen auszuwerten.

Vorzugsweise kann die Beleuchtungsvorrichtung in Abhängigkeit der Informationen über die Auswirkung der Beleuchtung und/oder der erfassten Köperdaten gesteuert werden, wobei die Datensammeleinrichtung dazu ausgebildet sein kann, die Beleuchtungsvorrichtung zu steuern.

Erfindungsgemäß ist außerdem ein Verfahren und ein System zur Steuerung einer Beleuchtungsvorrichtung vorgesehen, bei dem Körperdaten einer im Beleuchtungsbereich oder in einem vordefinierten Bereich der Beleuchtungsvorrichtung befindlichen Person erfasst werden und die Beleuchtungsvorrichtung dann in Abhängigkeit der erfassten Köperdaten gesteuert wird. Dass System weist hierzu eine Beleuchtungsvorrichtung und ein Mittel zur Erfassung von Körperdaten auf.

Sowohl bei dem Verfahren und dem System zur Steuerung einer Beleuchtungsvorrichtung als auch bei dem Verfahren und dem System zur Steuerung einer Beleuchtungsvorrichtung kann es sich bei dem vordefinierten Bereich um einen Teilbereich des Beleuchtungsbereichs der Beleuchtungsvorrichtung, insbesondere einen Arbeitsplatz, handeln.

Ebenso kann bei dem Verfahren und dem System zur Steuerung einer Beleuchtungsvorrichtung die Position der Person bestimmt wird, wobei die Bestimmung der Position der Person insbesondere dahingehend erfolgt, ob sich die Person innerhalb des Beleuchtungsbereichs bzw. vordefinierten Bereichs der Beleuchtungsvorrichtung befindet. Das System zur Steuerung einer Beleuchtungsvorrichtung kann dazu Mittel zur Bestimmung der Position der Person aufweisen, wobei es sich bei diesen um GPS-Mittel, RFID-Mittel, NFC-Mittel oder Bluetooth-Mittel handeln kann.

Vorteilhafterweise ist dann noch vorgesehen, dass die Körperdaten bzw. die Körperdaten und die Beleuchtungsinformationen nur dann erfasst werden wenn sich die Person innerhalb des Beleuchtungsbereichs bzw. vordefinierten Bereichs der Beleuchtungsvorrichtung befindet.

Bei dem Verfahren und dem System zur Steuerung einer Beleuchtungsvorrichtung ist vorzugsweise vorgesehen, dass die Datensammeleinrichtung zentral in einem Gebäude bzw. Gebäudekomplex, bspw. in einer Zentrale eines größeren Beleuchtungssystems, oder im Internet, bspw. in einer Cloud oder auf einem Server eines Herstellers, angeordnet ist. Alternativ dazu könnte die Datensammeleinrichtung auch lokal, bspw. in einem Smartphone, angeordnet sein.

Bei dem Verfahren und dem System zur Steuerung einer Beleuchtungsvorrichtung ist vorzugsweise vorgesehen, dass das System eine zentrale Steuervorrichtung aufweist, die zentral in einem Gebäude bzw. Gebäudekomplex, bspw. in einer Zentrale eines größeren Beleuchtungssystems, oder im Internet, bspw. in einer Cloud oder auf dem Server eines Herstellers, angeordnet ist. Dabei kann das System dazu ausgebildet sein, die von dem Mittel zur Erfassung von Körperdaten erfassten Köperdaten an die zentrale Steuervorrichtung zu übermitteln und die zentrale Steuervorrichtung kann dazu ausgebildet sein, die Beleuchtungsvorrichtung in Abhängigkeit der erfassten Köperdaten zu steuern.

Bevorzugt weist bei dem System zur Steuerung einer Beleuchtungsvorrichtung das Mittel zur Erfassung von Körperdaten eine Sensor-, Sende- und/oder Empfangseinheit zur Erfassung der Köperdaten auf, wobei die Sensor-, Sende- und/oder Empfangseinheit insbesondere in einem Activity Tracker, bspw. ein Armband oder eine Armbanduhr, oder in einer Smartwatch angeordnet ist. Zusätzlich kann außerdem eine Empfangs- und Sendeeinheit vorgesehen sein, wobei die Empfangs- und Sendeeinheit insbesondere in einem Smartphone angeordnet ist. Dabei kann des Weiteren die Sensor-, Sende- und/oder Empfangseinheit dazu ausgebildet sein, die erfassten Köperdaten an die Empfangs- und Sendeeinheit zu übermitteln.

Vorzugsweise ist die Empfangs- und Sendeeinheit dazu ausgebildet, die Beleuchtungsvorrichtung zu steuern.

Bei dem System zur Steuerung einer Beleuchtungsvorrichtung kann die Beleuchtungsvorrichtung dazu ausgebildet sein, die Beleuchtungsinformationen an die Sensor-, Sende- und/oder Empfangseinheit bzw. die Empfangs- und Sendeeinheit zu übermitteln und die Sensor-, Sende- und/oder Empfangseinheit bzw. Empfangs- und Sendeeinheit kann dazu ausgebildet sein, die Beleuchtungsinformationen den Köperdaten zuzuordnen und die einander zugeordneten Köperdaten und Beleuchtungsinformationen an die Datensammeleinrichtung bzw. über die Empfangs- und Sendeeinheit an die Datensammeleinrichtung zu übermitteln.

Alternativ dazu kann die Beleuchtungsvorrichtung auch dazu ausgebildet sein, die Beleuchtungsinformationen an die Datensammeleinrichtung zu übermitteln, die Sensor-, Sende- und/oder Empfangseinheit bzw. die Empfangs- und Sendeeinheit kann dazu ausgebildet sein, die Köperdaten an die Datensammeleinrichtung zu übermitteln und die Datensammeleinrichtung kann dazu ausgebildet sein, die übermittelten Köperdaten den übermittelten Beleuchtungsinformationen zuzuordnen.

Bei dem System zur Steuerung einer Beleuchtungsvorrichtung können die Mittel zur Bestimmung der Position in der oder zusammen mit der Sensor-, Sende- und/oder Empfangseinheit bzw. der Empfangs- und Sendeeinheit angeordnet sein.

Durch das erfindungsgemäße Verfahren bzw. erfindungsgemäße System zur Steuerung einer Beleuchtungsvorrichtung wird es ermöglicht, kontinuierlich während des normalen Betriebs einer Beleuchtungsvorrichtung Informationen über die Auswirkung des Lichts auf das Wohlbefinden und die Produktivität von Menschen bzw. Personen zu erhalten, wobei durch die vorgeschlagene Vorgehensweise von einer sehr großen Anzahl an Personen entsprechende Daten erfasst werden können.

Hierdurch kann im Vergleich zu bisherigen Studien, bei denen bspw. maximal ein paar hundert Personen teilgenommen haben, eine viel größere Anzahl, bspw. mehrere tausend oder sogar mehrere hunderttausend Personen dazu beitragen, Informationen über die Auswirkung des Lichts auf das Wohlbefinden und die Produktivität von Menschen zu erhalten. Damit kann dann erreicht werden, dass aufgrund der großen Anzahl an Personen bestimmte einzelne Störfaktoren reduziert bzw. ausgeschlossen werden können, wie bspw. die sehr spezielle Tagesform einer einzelnen Person oder die möglicherweise völlig andere Reaktion eines Menschen im Vergleich zu vielen anderen auf eine bestimmte Art von Licht.

Zu beachten ist dabei, dass es sich bei den Körperdaten bspw. um den Puls, Blutdruck und Schweiß, aber auch um Bewegungen des Users, die über MEMS-Gyroskope oder Beschleunigungssensoren ermittelt werden, handeln kann. Die Körperdaten dienen insbesondere dazu, die Reaktion des Menschen auf ein abgegebenes Licht bzw. eine abgegebene Beleuchtung der Beleuchtungsvorrichtung zu erfassen. D.h., durch die Zuordnung von Körperdaten zu entsprechenden Beleuchtungsinformationen ist es möglich, festzustellen, wie eine Person auf eine bestimmte Beleuchtungssituation reagiert bzw. wie sich diese Beleuchtungssituation auf die Person bzgl. Wohlbefinden und Produktivität auswirkt.

Des Weiteren ist auch anzumerken, dass entsprechende Daten bzw. Informationen über die Auswirkung der Beleuchtung, die durch ein Verfahren bzw. System zur Steuerung einer Beleuchtungsvorrichtung ermittelt und ausgewertet worden sind, auch in Beleuchtungsvorrichtungen bzw. entsprechenden Systemen verwendet werden können, bei denen keine Erfassung von Beleuchtungsinformationen und Köperdaten stattfindet. Dies kann bspw. dadurch erfolgen, dass ein Hersteller entsprechende Daten bzw. Informationen über die Auswirkung der Beleuchtung durch ein Verfahren bzw. System zur Steuerung einer Beleuchtungsvorrichtung ermittelt und auswertet und diese dann in Beleuchtungsvorrichtungen bzw. entsprechenden Systemen ohne Erfassung von Beleuchtungsinformationen und Köperdaten verwendet.

Durch das erfindungsgemäße Verfahren bzw. erfindungsgemäße System zur Steuerung einer Beleuchtungsvorrichtung ist es möglich, in Abhängigkeit von erfassten Körperdaten, d.h., in Abhängigkeit des Wohlbefindens bzw. der Produktivität einer Person, die Beleuchtungsvorrichtung entsprechend zu steuern. Hierbei ist es z.B. dann möglich, dass in der Beleuchtungsvorrichtung bereits entsprechende Vorgaben zu Steuerung der Beleuchtung gespeichert sind, die sich aus den Informationen über die Auswirkung der Beleuchtung ergeben, welche durch ein Verfahren bzw. System zur Steuerung einer Beleuchtungsvorrichtung ermittelt und ausgewertet worden sind. D.h. bspw., dass bei bestimmten ermittelten Körperdaten die Beleuchtung auf eine bestimmte Art und Weise gesteuert wird, wie dies durch die Vorgaben vorgegeben ist. Dies kann zusätzlich auch davon abhängen, in welchem Anwendungsbereich die Beleuchtungsvorrichtung angeordnet ist.

Ebenso wäre es aber auch denkbar, dass die Beleuchtungsvorrichtung durch die entsprechenden Körperdaten gesteuert wird, ohne dass entsprechende Vorgaben in der Beleuchtungsvorrichtung hinterlegt sind, die durch ein Verfahren bzw. System zur Steuerung einer Beleuchtungsvorrichtung ermittelt worden sind. In diesem Fall wäre es dann bspw. denkbar, dass die Beleuchtungsvorrichtung eine Veränderung der Beleuchtung vornimmt und anhand der dann ermittelten Körperdaten feststellen kann, inwieweit sich diese Beleuchtungsveränderung auf das Wohlbefinden und die Produktivität der Person ausgewirkt haben. Hierdurch ist dann eine immer fortwährende Anpassung möglich.

Nachfolgend soll die Erfindung anhand von Ausführungsbeispielen und den beiliegenden Zeichnungen näher erläutert werden. Es zeigen:
- Figur 1: schematische Darstellung eines Systems zur Steuerung einer Beleuchtungsvorrichtung;
- Figur 2: schematische Darstellung eines Systems zur Steuerung einer Beleuchtungsvorrichtung;
- Figur 3: schematische Darstellung eines Systems zur Steuerung einer einer Beleuchtungsvorrichtung;
- Figur 4: Darstellung verschiedener Activity Tracker zur Erfassung von Körperdaten;
- Figur 5: Darstellung eines Smartphones, welches Körperdaten empfängt.

Wie bereits zuvor erläutert, gewinnt das Lichtmanagement in den verschiedensten Bereichen der Beleuchtungstechnik immer mehr an Bedeutung. Ein Bereich, der dabei immer relevanter werden dürfte, ist die Wirkung des Lichts auf das Wohlbefinden und die Produktivität von Menschen bzw. Personen. Die bisherigen hierzu verfügbaren Studien sind jedoch eher wenig hilfreich, da insbesondere die Anzahl der Testpersonen aufgrund des relativ hohen Aufwands beschränkt war.

Die es sich durch derartige Studien ergebenden Dimm- und Farbtemperaturverläufe, welche an einer bzw. in einer Beleuchtungsvorrichtung hinterlegt waren, um diese entsprechend zu steuern, sind zudem starr und nicht weiter anpassungsfähig, bspw. an die örtlichen Gegebenheiten oder bestimmte Bedingungen eines Nutzers.

In der vorliegenden Erfindung ist es nunmehr vorgesehen, dass ein Mittel zur Erfassung von Körperdaten, Körperdaten einer Person erfasst, die sich im Beleuchtungsbereich oder in einem vordefinierten Bereich einer Beleuchtungsvorrichtung befindet. Gleichzeitig werden durch die Beleuchtungsvorrichtung entsprechende Beleuchtungsinformationen über die abgegebene Beleuchtung erfasst. Die zu einem bestimmten, gleichen Zeitpunkt erfassten Körperdaten und Beleuchtungsinformationen werden dann einander zugeordnet und an eine Datensammeleinrichtung übermittelt. Hierdurch besteht dann eine klare Zuordnung zwischen den Beleuchtungsinformationen und den zum gleichen Zeitpunkt erfassten Körperdaten, wodurch es möglich wird, dass diese gesammelten Daten ausgewertet werden können, insbesondere dahingehend, wie die Wirkung des Lichts auf das Wohlbefinden und die Produktivität von Menschen bzw. Personen ist.

Die Beleuchtungsinformationen geben dabei eine bestimmte, durch die Beleuchtungsvorrichtung erzeugte Beleuchtungssituation wieder, wobei es sich bspw. um Dimmwerte oder Farbtemperaturwerte handeln kann.

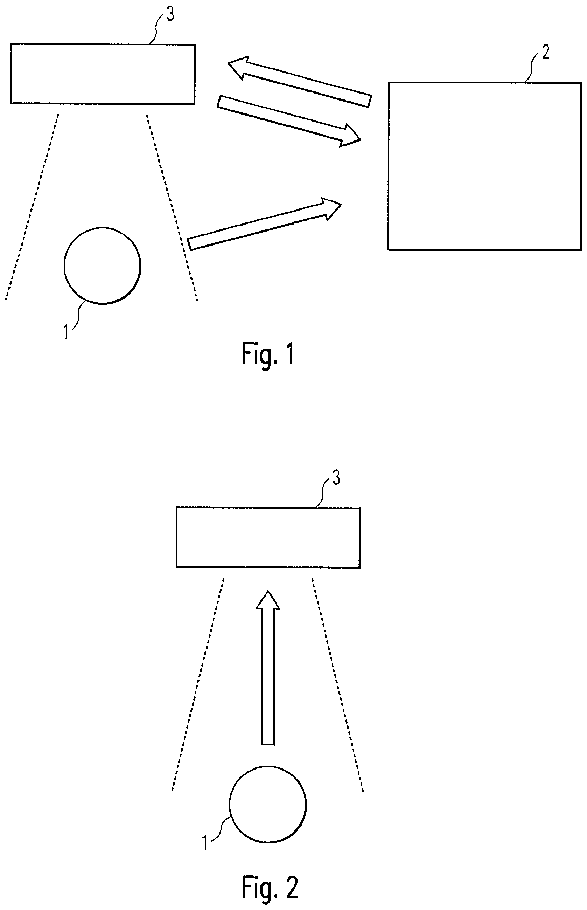

In Figur 1 ist dann schematisch ein System zur Steuerung einer Beleuchtungsvorrichtung gezeigt, wobei ein Mittel 1 zur Erfassung von Körperdaten vorgesehen ist, das die erfassten Körperdaten einer Person an eine Datensammeleinrichtung 2 übermittelt. Die Datensammeleinrichtung 2 empfängt zusätzlich auch noch Beleuchtungsinformationen einer Beleuchtungsvorrichtung 3, wobei die Körperdaten und die Beleuchtungsinformationen zu einem bestimmten, gleichen Zeitpunkt erfasst worden sind. Die Datensammeleinrichtung 2 ordnet dann die Körperdaten den entsprechenden Beleuchtungsinformationen zu.

Um dann eine Korrelation zwischen einer bestimmten Beleuchtungssituation, die durch die Beleuchtungsinformationen definiert ist, und den Körperdaten bzw. Vitaldaten zu ermitteln, wertet die Datensammeleinrichtung 2 die einander zugeordneten Körperdaten und Beleuchtungsinformationen aus, sodass sich ergibt, wie die Beleuchtungssituation sich auf das Wohlbefinden und die Produktivität der entsprechenden Person auswirkt.

Die Person, von der die Körperdaten erfasst werden, befindet sich hierbei innerhalb des Beleuchtungsbereichs oder eines vordefinierten Bereichs der Beleuchtungsvorrichtung 3, wobei sich bei dem vordefinierten Bereich der Beleuchtungsvorrichtung 3 um einen Teilbereich des Beleuchtungsbereichs handeln kann. Bspw. kann vorgesehen sein, dass eine Beleuchtungsvorrichtung bzw. Leuchte einem bestimmten Arbeitsplatz zugeordnet ist und es sich dementsprechend bei dem Arbeitsplatz um einen bestimmten vordefinierten Bereich handelt.

Zu beachten ist hierbei nun, dass eine Erfassung der Körperdaten einer Person nur dann Sinn macht, wenn die Person innerhalb des Beleuchtungsbereichs oder des vordefinierten Bereichs ist, da andernfalls das von der Beleuchtungsvorrichtung 3 abgegebene Licht keinen Einfluss auf das Wohlbefinden bzw. die Produktivität der Person hat. Hierzu kann dann bspw. vorgesehen sein, dass mit Hilfe entsprechender Mittel zur Bestimmung der Position der Person, die Position der Person dahingehend bestimmt wird, ob sich die Person innerhalb des Beleuchtungsbereichs bzw. vordefinierten Bereichs, bspw. eines Arbeitsplatzes befindet. Nur für den Fall, dass sich die Person dann innerhalb des Beleuchtungsbereichs bzw. vordefinierten Bereichs der Beleuchtungsvorrichtung befindet, werden die Körperdaten und möglicherweise die Beleuchtungsinformationen erfasst und einander zugeordnet.

Bei den Mitteln zur Bestimmung der Position kann es sich bspw. um entsprechende GPS-Mittel, RFID-Mittel, NFC-Mittel oder Bluetooth-Mittel handeln. Denkbar wären aber auch andere Mittel, die es ermöglichen, die Position einer Person zu bestimmen. So wäre es vorstellbar, dass bspw. mit Hilfe einer in einem Raum oder einer Halle angeordneten Kamera ermittelt wird, in welchem Bereich der Halle bzw. des Raums sich die Person befindet, wodurch dann bestimmt werden kann, ob die Person im Beleuchtungsbereich oder in einem vordefinierten Bereich der Beleuchtungsvorrichtung 3 ist.

Die Mittel zur Bestimmung der Position der Person sind des Weiteren auch dann sinnvoll und hilfreich, wenn in einem Gebäude oder Gebäudekomplex mehrere Beleuchtungsvorrichtungen 3 vorgesehen sind, die jeweils einen Beleuchtungsbereich oder einen vordefinierten Bereich aufweisen. In diesem Fall kann dann vorgesehen sein, dass für den Fall, dass sich die Person zwischen den verschiedenen Beleuchtungsvorrichtungen 3 hin und her bewegt, die Beleuchtungsinformationen der jeweiligen Beleuchtungsvorrichtung 3 mit den Körperdaten der Person verknüpft werden, sobald diese den Beleuchtungsbereich bzw. vordefinierten Bereich der jeweiligen Beleuchtungsvorrichtung 3 betritt. Die Bestimmung, in welchem Beleuchtungsbereich bzw. vordefinierten Bereich sich die Person gerade befindet, kann dann durch die Mittel zur Bestimmung der Position der Person vorgenommen werden.

Alternativ hierzu könnte aber auch vorgesehen sein, dass die Körperdaten der Person nur einer vorher festgelegten bestimmten Beleuchtungsvorrichtung 3 bzw. deren Beleuchtungsinformationen zugeordnet werden, bspw. dem Arbeitsplatz der Person, für den Fall, dass die Person einen festen Arbeitsplatz innerhalb eines Gebäudes hat. D.h., in diesem Fall würde eine Zuordnung nur dann stattfinden, wenn die Person am Arbeitsplatz ist, jedoch nicht, wenn die Person bspw. mittags in die Kantine geht.

Des Weiteren kann auch dann vorgesehen sein, dass eine Beleuchtungsvorrichtung 3 und mehrere Personen vorgesehen sind, wobei die Beleuchtungsinformationen der Beleuchtungsvorrichtung 3 jeweils den Körperdaten jeder Person zugeordnet werden.

Um eine möglichst große Datensammlung zu erhalten, ist insbesondere vorgesehen, dass sowohl Beleuchtungsinformationen mehrerer Beleuchtungsvorrichtungen 3 als auch Körperdaten mehrerer Personen vorliegen, wobei die Körperdaten einer Person den Beleuchtungsinformationen der Beleuchtungsvorrichtung 3 zugeordnet werden, in dessen Beleuchtungsbereich bzw. vordefinierten Bereich sich die Person zum Zeitpunkt der Erfassung der Beleuchtungsinformationen und Körperdaten befindet.

Des Weiteren ist auch vorgesehen, dass die Körperdaten und Beleuchtungsinformationen bspw. im Sekundentakt oder Minutentakt erfasst werden und dies über einen längeren Zeitraum erfolgt, wobei die Möglichkeit besteht, dass der Ablauf der Beleuchtung gezielt modifiziert wird, um feststellen zu können, ob entsprechende Änderungen in der Beleuchtung Einfluss auf die Körperdaten haben und wenn ja, welchen Einfluss. Dabei besteht die Möglichkeit, dass durch systematisches Verändern der Beleuchtungssituationen Erkenntnisse darüber gewonnen werden können, wie die Beleuchtung beeinflusst werden muss, um das Wohlbefinden der Person bzw. deren körperliche Daten zu verbessern.

Grundsätzlich kann dabei vorgesehen sein, dass vor Beginn der Erfassung von Körperdaten und Beleuchtungsinformationen in einer Beleuchtungsvorrichtung 3 bereits entsprechende Dimm- und Farbtemperaturverläufe als Anfangsverläufe abgespeichert sind, die sich bspw. durch bisher bereits bekannte Studien ergeben. Diese Dimm- und Farbtemperaturverläufe helfen zu Beginn bei der Steuerung der Beleuchtungsvorrichtung 3, wobei durch die Erfassung und Zuordnung von Körperdaten und Beleuchtungsinformationen und der entsprechenden Auswertung entsprechende neue Informationen über die Auswirkungen von Licht auf das Wohlbefinden bzw. die Produktivität einer Person erhalten werden können, wodurch dann die anfänglich abgespeicherten Dimm-und Farbtemperaturverläufe weiter verbessert werden können bzw. neu berechnet oder angepasst werden können. D.h., die in der Beleuchtungsvorrichtung 3 hinterlegten Werte zur Steuerung der Beleuchtungsvorrichtung 3 können an die Informationen, die sich durch die Auswertung der entsprechenden Daten ergeben, angepasst werden, wobei diese Anpassung sowohl vor als auch während einer unmittelbaren Steuerung der Beleuchtungsvorrichtung 3 erfolgen kann.

Die zuvor erwähnten Anfangsverläufe können dann auch in der Datensammeleinrichtung 2 gespeichert sein und werden dann mit der Beleuchtungsvorrichtung 3 synchronisiert. Hierbei besteht auch zu Beginn bereits die Möglichkeit, dass ein Benutzer über eine entsprechende App die Verläufe nach seinen Wünschen anpasst. Hierbei könnten dann auch in der Datensammeleinrichtung 2 optimierte Lichtverläufe erstellt werden, wobei es sich hierbei bspw. um verbesserte Dimm- und Farbtemperaturverläufe oder entsprechende Beleuchtungsstärkeverläufe handelt. Die optimierten Lichtverläufe können dann an die Beleuchtungsvorrichtung 3 übermittelt werden, wobei dies auch über ein Smartphone erfolgen kann, das direkt mit der Beleuchtungsvorrichtung 3 in Verbindung steht.

Unabhängig davon, ob eine Anpassung von in der Beleuchtungsvorrichtung 3 hinterlegten Werten vorgenommen wird, und auch unabhängig davon, ob überhaupt bestimmte Werte in der Beleuchtungsvorrichtung 3 hinterlegt sind, kann bei der Steuerung der Beleuchtungsvorrichtung 3 vorgesehen sein, dass die Beleuchtungsvorrichtung 3 in Abhängigkeit der erfassten Körperdaten und der Informationen, die sich durch die Auswertung der gesammelten Daten ergeben, gesteuert wird. Ebenso kann aber auch vorgesehen sein, dass die Beleuchtungsvorrichtung 3 nur in Abhängigkeit der erfassten Körperdaten oder nur in Abhängigkeit der Informationen, die sich durch die Auswertung der gesammelten Daten ergeben, gesteuert wird.

Bei der Steuerung können also unmittelbar die erfassten Körperdaten zur Steuerung mit verwendet werden, wobei weiterhin parallel dann auch immer noch die Möglichkeit besteht, dass die erfassten Körperdaten und Beleuchtungsinformationen nach wie vor einander zugeordnet und zur Auswertung an die Datensammeleinrichtung 2 übermittel werden.

Das Datensammeln (Erfassen der Körperdaten und Beleuchtungsinformationen und Zuordnen dieser zueinander), das Auswerten der gesammelten Daten im Hinblick auf das Wohlbefinden bzw. die Produktivität von Personen und ggf. das darauf abgestimmte Anpassen von Werten und Steuern der Beleuchtungsvorrichtung, kann dabei sowohl innerhalb eines Gebäudes bzw. Gebäudekomplexes durchgeführt werden, als auch über sehr große unterschiedliche Gebäude hinweg bis hin zu einer weltweiten Erfassung. Hierdurch ist es dann möglich, dass sich im Vergleich zu bisherigen bekannten Studien ein deutlich umfangreicherer Datensatz ergibt, bei dem dann die Gefahr, dass einzelne statistische Abweichungen die Aussagekraft des Ergebnisses verschlechtern, deutlich reduziert wird. Zusätzlich hat die einzelne Tagesverfassung einzelner Personen keinen signifikanten Einfluss mehr auf das Ergebnis der gesamten Daten.

Somit besteht dann bspw. für einen Hersteller die Möglichkeit, auf Basis einer relativ umfangreichen Datensammlung relativ gute Werte im Hinblick auf die Auswirkungen des Lichts auf das Wohlbefinden und die Produktivität von Personen unabhängig von einzelnen Personen zu erhalten, wodurch dann auch die Möglichkeit besteht, dass ein Hersteller entsprechende Beleuchtungsvorrichtungen besser anpassen kann. Somit ist es auch möglich, dass eine Beleuchtungsvorrichtung bspw. bereits bei ihrer Herstellung mit entsprechenden Daten versorgt wird, sodass die Beleuchtungsvorrichtung verbesserte Werte, bspw. für Dimm-und Farbtemperaturverläufe, und dementsprechend auch eine verbesserte Steuerung aufweist, unabhängig davon, ob die entsprechenden Nutzer Mittel zur Erfassung von Körperdaten aufweisen. D.h., dass die verbesserten Daten dann auch in bisherigen Beleuchtungsvorrichtungen Anwendung finden können, unabhängig davon, ob Körperdaten von entsprechenden Nutzern an eine Datensammeleinrichtung übermittelt werden.

Ebenso ist es auch möglich, dass zwar entsprechende Mittel zur Erfassung von Körperdaten von Personen vorhanden sind, jedoch keine Daten gesammelt werden, d.h., es findet keine Zuordnung von Beleuchtungsinformationen zu Körperdaten statt und es werden keine derartigen zugeordneten Daten an eine Datensammeleinrichtung zur Auswertung übermittelt. In diesem Fall ist lediglich vorgesehen, dass eine Steuerung der Beleuchtungsvorrichtung in Abhängigkeit der erfassten Körperdaten erfolgt. Ein derartiges System ist bspw. in Figur 2 gezeigt, bei dem ein Mittel 1 zur Erfassung von Körperdaten und eine Beleuchtungsvorrichtung 3 vorgesehen sind.

Bei der Steuerung der Beleuchtungsvorrichtung 3 in Figur 2 werden dementsprechend wiederum die Körperdaten verwendet, um eine optimale Steuerung der Beleuchtungsvorrichtung 3 zu ermöglichen. Dabei ist es auch möglich, dass entsprechende Mittel zur Positionsbestimmung verwendet werden, wodurch festgestellt werden kann, wo sich eine Person befindet. Diesbezüglich soll auch auf die zuvor ausführlich gemachten Anmerkungen im Hinblick auf die Mittel zur Positionsbestimmung verwiesen werden, die hier auch in gleicher Weise verwendet werden können. D.h., es kann festgelegt werden, dass Körperdaten nur erfasst werden und die entsprechende Beleuchtungsvorrichtung 3 nur gesteuert wird, wenn eine Person an einem bestimmten Arbeitsplatz bzw. in einem bestimmten Beleuchtungsbereich bzw. vordefinierten Bereich der Beleuchtungsvorrichtung 3 ist. Ebenso wäre es aber auch möglich, dass jeweils genau die Beleuchtungsvorrichtung 3 innerhalb eines Gebäudes mit Hilfe der erfassten Körperdaten gesteuert wird, in dessen Beleuchtungsbereich bzw. vordefinierten Bereich sich die jeweilige Person aktuell befindet.

Zu dem sowohl in Figur 1 als auch in Figur 2 gezeigten Mittel 1 zur Erfassung von Körperdaten ist anzumerken, dass dieses eine Sensor, Sende- und/oder Empfangseinheit aufweisen kann, die dazu ausgebildet ist, entsprechende Körperdaten zu ermitteln bzw. zu erfassen und anschließend an eine andere Vorrichtung zu übermitteln. Bei der Sensor, Sende- und/oder Empfangseinheit kann es sich bspw. um einen sog. Activity Tracker handeln, welcher in letzter Zeit zunehmend Einzug in den Alltag gefunden hat. Ebenso kann die Sensor, Sende- und/oder Empfangseinheit auch in einem sog. Activity Tracker angeordnet sein. Derartige Activity Tracker können bspw. die Form einer Armbanduhr oder eines Armbands aufweisen, wobei diese kontinuierlich verschiedenste Körperdaten messen können.

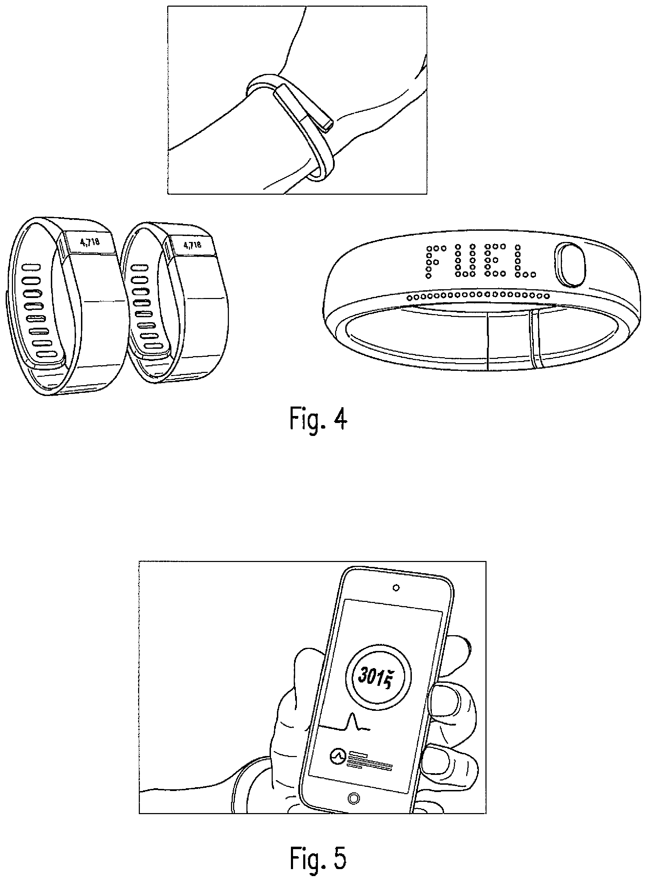

In Figur 4 sind dann verschiedene Activity Tracker gezeigt. Derzeit kommen diese Activity Tracker zumeist im Sport zum Einsatz, wobei jedoch auch andere Einsatzbereiche möglich sind. Durch die Messung der entsprechenden Körperdaten ist es bspw. möglich, den Stresslevel oder den Wachheitsgrad einer Person zu messen bzw. zu ermitteln, wodurch feststellbar ist, wie sich das Licht auf einen Menschen auswirkt. Beispiele für solche Activity Tracker sind u.a. die Produkte Fitbit, Jawbone Up oder das Fuelband von Nike. Ebenso könnte es sich aber auch um ein einfaches herstellerspezifisches, möglichst billig hergestelltes Armband handeln, damit eine möglichst große Anzahl an Personen damit ausgestattet werden können.

Als Alternative zu den bisherigen klassischen Activity Trackern könnte als Sensor, Sende- und/oder Empfangseinheit auch eine Smartwatch Anwendung finden, die es ebenfalls ermöglicht, entsprechende Körperdaten zu messen. Ebenso kann die Sensor, Sende- und/oder Empfangseinheit auch in einer Smartwatch angeordnet sein.

Des Weiteren sind auch andere Mittel aus der Wearable Technology vorstellbar, die entsprechende Körperdaten erfassen können. Grundsätzlich eignet sich als Mittel zur Erfassung von Körperdaten jede vorstellbare Sensor, Sende- und/oder Empfangseinheit, die es zum einen ermöglicht, Körperdaten zu erfassen und es zum anderen ermöglicht, diese erfassten Körperdaten zu verarbeiten bzw. weiterzuleiten.

Je nach verwendeter Sensor, Sende- und/oder Empfangseinheit kann es dann noch sinnvoll sein, dass eine weitere Empfangs- und Sendeeinheit vorgesehen ist, an die die Sensor, Sende- und/oder Empfangseinheit als Mittel zur Erfassung von Körperdaten, die Körperdaten übermitteln kann. Bspw. sind die oben erwähnten Activity Tracker derzeit zumeist mit einem Smartphone gekoppelt, d.h., die erfassten Körperdaten werden von dem Activity Tracker an das Smartphone übermittelt bzw. das Smartphone steht mit dem Activity Tracker in Verbindung. Entsprechend, ist dann das Smartphone als Empfangs- und Sendeeinheit zu sehen. Ein Smartphone, das entsprechende Körperdaten empfängt, ist bspw. in Figur 5 gezeigt.

Zusätzlich ist es auch vorstellbar, dass auf einem Smartphone bspw. eine App installiert ist, durch welche es einem Benutzer ermöglicht wird, bestimmte Einstellungen vorzunehmen, die eine gewünschte Befindlichkeit der Person angeben, d.h., bspw. ob die Person eher entspannen will oder dergleichen. Ebenso wäre es auch vorstellbar, entsprechende Dimm- und Farbtemperaturverläufe zu ändern bzw. anzupassen.

Bei der vorliegenden Erfindung kann dann vorgesehen sein, dass die durch die Sensor, Sende- und Empfangseinheit erfassten Körperdaten durch die Sensor, Sende- und Empfangseinheit an die Empfangs- und Sendeeinheit übermittelt werden und die Empfangs- und Sendeeinheit dann die empfangenen Körperdaten weiter an die Datensammeleinrichtung übermittelt. Dabei kann bspw. vorgesehen sein, dass die Empfangs- und Sendeeinheit zusätzlich auch die Beleuchtungsinformationen der Beleuchtungsvorrichtung empfängt und eine Zuordnung der Beleuchtungsinformationen und der entsprechenden Körperdaten zueinander bereits in der Empfangs- und Sendeeinheit stattfindet und dann anschließend die einander zugeordneten Körperdaten und Beleuchtungsinformationen an die Datensammeleinrichtung übermittelt werden.

Alternativ dazu wäre es aber auch denkbar, dass die Empfangs- und Sendeeinheit neben den erfassten Körperdaten zwar auch die Beleuchtungsinformationen empfängt, jedoch noch keine Zuordnung der Körperdaten und Beleuchtungsinformationen zueinander vornimmt, sondern die Körperdaten und die Beleuchtungsinformationen an die Datensammeleinrichtung übermittelt und dann erst die Datensammeleinrichtung die Zuordnung der Körperdaten und der Beleuchtungsinformationen zueinander vornimmt. Hierbei wäre es aber auch möglich, dass die Datensammeleinrichtung unmittelbar die Beleuchtungsinformationen der Beleuchtungsvorrichtung empfängt und eine entsprechende Zuordnung zu den von der Empfangs- und Sendeeinheit empfangenen Körperdaten vornimmt.

Des Weiteren wäre es aber auch möglich, dass die Empfangs- und Sendeeinheit die Beleuchtungsinformationen von der Beleuchtungsvorrichtung empfängt und dann an die Sensor, Sende- und/oder Empfangseinheit übermittelt und die Sensor, Sende- und/oder Empfangseinheit eine Zuordnung der Körperdaten und Beleuchtungsinformationen zueinander vornimmt und diese zugeordneten Körperdaten und Beleuchtungsinformationen dann direkt an die Datensammeleinrichtung oder über die Empfangs- und Sendeeinheit an die Datensammeleinrichtung übermittelt.

Zusätzlich ist es auch möglich, dass die Sensor, Sende- und/oder Empfangseinheit derart ausgestaltet ist, bspw. eine entsprechend weiterentwickelte Smartwatch, dass die Sensor, Sende- und/oder Empfangseinheit direkt mit der Datensammeleinrichtung in Verbindung steht und dementsprechend die Körperdaten auch unmittelbar an die Datensammeleinrichtung übermittelt. Hierbei ist es möglich, dass die Datensammeleinrichtung die Beleuchtungsinformationen der Beleuchtungsvorrichtung empfängt und eine entsprechende Zuordnung zu den Körperdaten vornimmt.

Ebenso ist es auch vorstellbar, dass die Sensor, Sende- und/oder Empfangseinheit die Beleuchtungsinformationen von der Beleuchtungsvorrichtung empfängt, eine Zuordnung zu den Körperdaten vornimmt und die einander zugeordneten Körperdaten und Beleuchtungsinformationen an die Datensammeleinrichtung übermittelt, oder dass die Sensor, Sende- und/oder Empfangseinheit die Beleuchtungsinformationen von der Beleuchtungsvorrichtung zwar empfängt, jedoch keine Zuordnung zu den Körperdaten vornimmt, sondern die Körperdaten und die Beleuchtungsinformationen an die Datensammeleinrichtung übermittelt, wobei dann die Zuordnung durch die Datensammeleinrichtung erfolgt.

Des Weiteren wäre es aber auch denkbar, dass die Datensammeleinrichtung die Beleuchtungsinformationen empfängt und dann an die Sensor, Sende- und/oder Empfangseinheit übermittelt und die Sensor, Sende- und/oder Empfangseinheit eine Zuordnung zu den Körperdaten vornimmt und anschließend die einander zugeordneten Körperdaten und Beleuchtungsinformationen an die Datensammeleinrichtung übermittelt.

Zu beachten ist dabei, dass bei den zuvor beschriebenen Möglichkeiten zusätzlich auch vorgesehen sein kann, dass zwischen der Sensor, Sende- und/oder Empfangseinheit trotzallem eine Empfangs- und Sendeeinheit angeordnet ist, die in diesem Fall dann lediglich dazu dient, die Datenübermittlung zwischen der Sensor, Sende- und/oder Empfangseinheit und der Datensammeleinrichtung vorzunehmen.

Insgesamt ist also anzumerken, dass sowohl die Sensor, Sende- und/oder Empfangseinheit oder die Empfangs- und Sendeeinheit als auch die Datensammeleinrichtung dazu ausgebildet sein können, die Beleuchtungsinformationen der Beleuchtungsvorrichtung zu empfangen und dann entweder selber entsprechend dazu ausgebildet sind, die Körperdaten und Beleuchtungsinformationen einander zuzuordnen oder an die Einheit bzw. Einrichtung zu übermitteln, die die Zuordnung vornimmt. Je nach dem, in welcher Einheit bzw. Einrichtung die Zuordnung stattfindet, werden die Körperdaten von der Sensor, Sende- und/oder Empfangseinheit an die Empfangs- und Sendeeinheit, die Datensammeleinrichtung oder über die Empfangs- und Sendeeinheit an die Datensammeleinrichtung übermittelt. Zuletzt werden die zugeordneten Körperdaten und Beleuchtungsinformationen, für den Fall, dass die Zuordnung nicht in der Datensammeleinrichtung erfolgt ist, an die Datensammeleinrichtung übermittelt.

Die Datensammeleinrichtung kann dann in einer Zentrale eines Beleuchtungssystems eines größeren Gebäudes oder Gebäudekomplexes angeordnet sein, wobei die Zentrale bspw. einen entsprechenden Server oder dergleichen aufweist. Ebenso ist es vorstellbar, dass über entsprechende Internetverbindungen der jeweiligen Geräte die Datensammeleinrichtung an einer beliebigen Stelle innerhalb des Internets angeordnet ist, d.h., bspw. in einer Cloud, wobei dann die entsprechenden Rechen- und Speicherkapazitäten in der Cloud oder irgendwo im Internet zur Verfügung gestellt werden können, bspw. auf entsprechenden Server-Farmen, wodurch die Möglichkeit besteht, sehr große Mengen an Daten zu sammeln, sowohl von einer sehr großen Anzahl an Benutzern, als auch von einer sehr großen Anzahl an Beleuchtungsvorrichtungen, an völlig verschiedenen Orten auf der Welt, wodurch sich eine Studie mit einer sehr großen Anzahl an Daten ergibt, die erheblich aussagekräftiger als die bisherigen Studien ist.

Bei einer entsprechenden Cloud oder einer Server-Farm kann es sich bspw. auch um einen Server oder eine Server-Farm eines Herstellers von Beleuchtungsvorrichtungen handeln, wodurch dieser an einer zentralen Stelle, möglicherweise auch anonymisiert, entsprechende Daten bei sich sammeln kann und hierdurch eine relativ große Studie über die Auswirkungen der Beleuchtung auf Menschen erhält. Dies eröffnet die Möglichkeit, dass zukünftige Beleuchtungsvorrichtungen bereits in der Herstellungsphase entsprechend verbessert werden.

Für den Fall, dass die Datensammeleinrichtung in einer Zentrale eines Gebäudekomplexes oder eines Gebäudes oder auch irgendwo im Internet angeordnet ist, ist es bspw. möglich, dass ein Smartphone als Empfangs- und Sendeeinheit mit der Datensammeleinrichtung über eine entsprechende Verbindung kommuniziert, bspw. über ein WLAN innerhalb eines Gebäudes oder über das Telefonnetz und das Internet. Ebenso wäre es aber auch möglich, dass die Sensor, Sende- und/oder Empfangseinheit ohne Umweg über ein Smartphone oder eine Empfangs- und Sendeeinheit direkt mit der Datensammeleinrichtung kommuniziert, wobei dann die entsprechende Sensor, Sende- und/oder Empfangseinheit bspw. vergleichbare Kommunikationsmittel wie ein Smartphone aufweist. Dies ist bspw. vorstellbar in einer Smartwatch, die entsprechend weiterentwickelt, derart ausgestaltet ist, dass diese autark von einem Smartphone betrieben werden kann. Ebenso wäre es aber auch möglich, dass eine Sensor, Sende- und/oder Empfangseinheit über einen Router, der dann als Empfangs- und Sendeeinheit dient, mit der Datensammeleinrichtung kommuniziert.

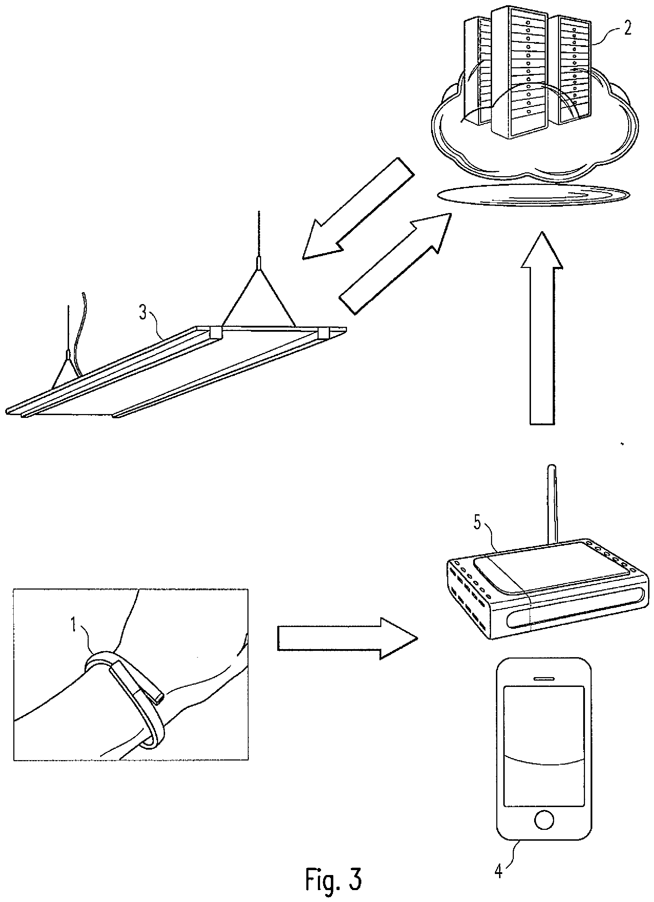

In Figur 3 ist nun beispielhaft ein entsprechendes System zur Steuerung einer Beleuchtungsvorrichtung gezeigt, bei dem ein Activity Tracker als Sensor, Sende- und/oder Empfangseinheit 1 entweder mit einem Smartphone als Empfangs- und Sendeeinheit 4 oder einem Router 5 kommuniziert und das Smartphone 4 oder der Router 5 dann mit der Datensammeleinrichtung 2. Die Beleuchtungsvorrichtung 3 steht dabei unmittelbar mit der Datensammeleinrichtung 2 in Verbindung.

Bei den Körperdaten kann es sich bspw. um den Blutdruck, Puls, Schweiß, die Körpertemperatur oder die Bewegungsgeschwindigkeit und Bewegungshäufigkeit einer Person handeln. Mit Hilfe dieser Parameter kann dann ermittelt werden, in wie weit eine bestimmte Beleuchtungssituation Einfluss auf das Befinden bzw. Wohlbefinden einer Person hat und auch auf deren Produktivität.

Aus Datenschutzgründen ist bei der vorliegenden Erfindung vorzugsweise vorgesehen, dass die übermittelten Daten anonymisiert werden. Auf freiwilliger Basis kann dann allerdings durchaus auch vorgesehen sein, dass zum Verbessern der Datenauswertung diese zusätzlich durch Informationen zur Person, wie bspw. Alter, Geschlecht oder dergleichen ergänzt werden. Außerdem ist es auch möglich, bspw. Informationen über einen Benutzertyp, wie bspw. Produktionsmitarbeiter oder Büroangestellter oder Patient mit anzugeben oder auch Informationen zu einem Unternehmen, in dem man arbeitet. Die Eingabe derartiger Daten kann bspw. mit einer entsprechenden App erfolgen.

Durch die Verwendung der entsprechenden Mittel zur Erfassung von Körperdaten werden dann bspw. Mitarbeiter in der Produktion oder im Büro dazu verwendet, entsprechende Körperdaten zu messen bzw. zu erfassen, wobei gleichzeitig auch entsprechende Beleuchtungsinformationen ermittelt bzw. erfasst werden. Hierdurch ist es möglich, eine Aussage über die Auswirkung der Beleuchtung zu treffen, wobei sich dies insbesondere bzw. vorteilhaft dadurch ergibt, indem die Lichtverläufe geändert werden und die physiologische Reaktion des Menschen auf diese Änderung gemessen wird.

Mit Hilfe dieser Informationen, die an die Datensammeleinrichtung übermittelt werden, besteht die Möglichkeit, auf Grundlage einer großen Anzahl entsprechender Daten, einen verbesserten Lichtverlauf zu erstellen.

Durch die freiwillig angegebenen demografischen Daten ist es zusätzlich möglich, dass durch die Kombination von demografischen Daten, Angaben zu Applikation und den Körperdaten statistische Aussagen getroffen werden können, welche Verläufe bei bestimmten Benutzergruppen den besten physiologischen Effekt erzielen.

Vorteilhaft bei dieser Vorgehensweise ist nunmehr, dass nicht mehr im Labor unter unnatürlichen Bedingungen anhand einer kleinen Stichprobe an Usern bzw. Nutzern wenige Messreihen durchgeführt werden und so keine verlässlichen Aussagen erhalten werden können. Stattdessen ist es nunmehr möglich, eine sehr große Anzahl an Teilnehmern zu nutzen, theoretisch sogar von allen gesammelten Daten weltweit, und daraus eine verlässliche Aussage zu erzielen. Die Körperdaten können dabei, wie weiter oben bereits erläutert, bspw. alle paar Sekunden gemessen werden, wodurch sich eine relativ große Datenmenge ergibt, die statistisch ausgewertet werden kann. Hierdurch ergibt sich aufgrund der Vielzahl an Daten dann auch der Vorteil, dass statistische Störgrößen, wie z.B. Tagesverfassung, die bei bisherigen Studien, durch die kleine Stichprobenmenge, die Ergebnisse stark verfälschen können, durch die großen Datenmengen herausgefiltert werden können. Dies ist insbesondere auch bei Faktoren wie dem Wohlbefinden und dem Stresslevel von Bedeutung.

Sowohl bei dem Verfahren bzw. System zur Steuerung einer Beleuchtungsvorrichtung besteht auch die Möglichkeit, dass bspw. über eine App in einem Smartphone der Benutzer die Möglichkeit hat, die Sensor, Sende- und/oder Empfangseinheit, bspw. den Activity Tracker, einer bestimmten Beleuchtungsvorrichtung zuzuordnen. Ebenso besteht auch die Möglichkeit, dass ein Benutzer bestimmt, welche Beleuchtungsvorrichtungen für ihn von Bedeutung sind, d.h., welche Beleuchtungsvorrichtungen er steuern will. Dies gilt auch für die Erfassung und Zuordnung von Beleuchtungsinformationen und Körperdaten, da hierdurch der Benutzer bestimmen kann, welche Beleuchtungsvorrichtungen für ihn relevant sind und dementsprechend bei welchen Beleuchtungsvorrichtungen eine entsprechende Zuordnung erfolgen soll.

Wie bereits zuvor erwähnt, besteht außerdem die Möglichkeit, dass entsprechend optimierte Lichtverläufe auch in Beleuchtungsvorrichtungen Anwendung finden, bei denen Nutzer keine entsprechenden Mittel zur Erfassung von Körperdaten aufweisen. Durch die optimierten Lichtverläufe würde aber trotzdem erreicht, dass auch diese Beleuchtungsvorrichtungen eine verbesserte Lichtabgabe aufweisen.

Nachfolgend soll kurz auf einige Anwendungsgebiete eingegangen werden, bei denen eine Optimierung der Steuerung einer Beleuchtungsvorrichtung Vorteile mit sich bringt.

In der Industrie beispielsweise könnten alle Mitarbeiter in Produktionsumgebungen mit entsprechenden Activity Trackern ausgestattet werden. Diese messen Puls, Körpertemperatur, Bewegungsgeschwindigkeit und Bewegungshäufigkeit. Wenn dann Produktionsschritte beispielsweise eine sehr hohe Konzentration erfordern, kann mittels Messen dieser Parameter der Stress oder auch die Müdigkeit der Person beurteilt werden. Hierfür werden die Parameter empirisch ausgewertet und entsprechende Rückschlüsse daraus gezogen. So kann beispielsweise eine reduzierte Bewegungsgeschwindigkeit auf Müdigkeit hinweisen oder auch ein erhöhter Puls und erhöhte Körpertemperatur auf eine Stresssituation deuten.

Wenn der Activity Tracker diese Parameter misst kann nun das Beleuchtungssystem bzw. die Beleuchtungsvorrichtung entsprechend der erkannten Situation reagieren und mittels Verändern der Beleuchtungsstärke oder der Farbtemperatur aktivierend oder beruhigend auf die jeweiligen Personen wirken. Dadurch werden die Personen konzentrierter und die Fehlerhäufigkeit wird minimiert. Gleichzeitig können durch messen dieser Daten auch mögliche gesundheitliche Probleme gefunden werden und die Mitarbeiter besser betreut werden.

Durch Aufnehmen der Daten aller Personen kann auch empirisch ermittelt werden welches Licht die beste Wirkung erzielt und welche Lichtsituation von den Personen bevorzugt wird. Diese Erkenntnisse können dann in allen Projekten verwendet werden.

Auch in Bürobereichen könnten alle Mitarbeiter in Produktionsumgebungen mit besagten Activity Trackern ausgestattet werden. Diese messen wiederum Puls, Körpertemperatur, Bewegungsgeschwindigkeit und Bewegungshäufigkeit und Richtung. Das Prinzip des aktivierenden und beruhigenden Lichts kann auch hier angewendet werden.

Durch die Aufnahme der Bewegungsgeschwindigkeit/Häufigkeit und Richtung kann außerdem ein Muster kreiert werden und mögliche unnütze Wege zu erkennen und zu eliminieren. So kann bspw. herauskommen das eine Replatzierung des Druckers eine signifikante Zeitersparnis bringen kann.

Im Bereich von Shops sollen Kunden zum Kauf angeregt werden. Dazu gibt es aktuelle Studien, wie z.B. Limbic Lighting, die für verschiedenen Kundencluster optimale Dimm- und Farbtemperaturwerte vorschlagen. Denkbar wäre es hier, dass die Körperdaten von Kunden im Besitz eines Activity Trackers beim Einkauf gemessen werden, um so das Licht weiter zu optimieren. Hierzu wäre es dann erforderlich Kunden zur Teilnahme zu motivieren, evtl. über Incentive- und Rabattsysteme. Des Weiteren kann über kluge Positionsbestimmung auch das Licht entsprechend gesteuert werden, sodass es Kunden motiviert weitere Artikel zu kaufen und sich länger im Shop aufzuhalten.

In Krankenhäusern kann optimales Licht bspw. die Regeneration von Patienten unterstützen. Auch hier können Körperdaten gemessen werden, um Lichtverläufe weiter zu optimieren. Hier stellt sich die Herausforderung, krankheitsbedingte Körperdaten aus den Messdaten herauszufiltern. Die große Menge an Daten, die gesammelt werden kann, kann hier hilfreich sein.

Aus diesen Anwendungsbeispielen ergibt sich, dass die Ziele hinsichtlich der Optimierung der Steuerung der Beleuchtung unterschiedlich sein können und je nach Einsatzgebiet bzw. Anwendungsbereich auch verschieden sein können.

## Patentansprüche

1. Verfahren zur Steuerung einer Beleuchtungsvorrichtung (3), bei dem
- Beleuchtungsinformationen über die von der Beleuchtungsvorrichtung (3) abgegebene Beleuchtung und
- Körperdaten einer im Beleuchtungsbereich oder in einem vordefinierten Bereich der Beleuchtungsvorrichtung (3) befindlichen Person erfasst werden,
wobei die Beleuchtungsinformationen eine, durch die Beleuchtungsvorrichtung erzeugte Beleuchtungssituation wiedergeben,
und wobei es sich bei den Beleuchtungsinformationen um Dimmwerte und/oder Farbtemperaturwerte handeln kann,
wobei es sich bei den Körperdaten um Daten handelt, welche derart beschaffen sind, eine physiologische Reaktion der Person auf ein abgegebenes Licht bzw. eine abgegebene Beleuchtung der Beleuchtungsvorrichtung darzustellen,
und wobei es sich hierbei bei den Körperdaten um Daten über den Puls, Blutdruck, Schweiß, und/oder Bewegungen, welche über MEMS-Gyroskope oder Beschleunigungssensoren ermittelt werden, der Person handelt,
**dadurch gekennzeichnet,**
**dass** die zu einem bestimmten, gleichen Zeitpunkt erfassten Köperdaten und Beleuchtungsinformationen einander zugeordnet werden und an eine Datensammeleinrichtung (2) übermittelt werden,
wobei die einander zugeordneten Körperdaten und Beleuchtungsinformationen derart ausgewertet werden, dass sich Informationen über die Auswirkung der Beleuchtung der Beleuchtungsvorrichtung (3) auf das Wohlbefinden bzw. die Produktivität der Person ergeben,
und wobei die Beleuchtungsvorrichtung (3) in Abhängigkeit der Informationen über die Auswirkung der Beleuchtung und/oder der erfassten Köperdaten gesteuert wird.

2. Verfahren nach Anspruch 1,
wobei zu mehreren, verschiedenen Zeitpunkten Köperdaten und Beleuchtungsinformationen erfasst und jeweils einander zugeordnet werden und an die Datensammeleinrichtung (2) übermittelt werden,
wobei die Beleuchtungsvorrichtung (3) insbesondere zu den verschiedenen Zeitpunkten jeweils eine andere Beleuchtung abgibt.

3. Verfahren nach einem der Ansprüche 1-2,
wobei mehrere Beleuchtungsvorrichtungen (3) vorhanden sind, wobei die Körperdaten der Person den Beleuchtungsinformationen der Beleuchtungsvorrichtung (3) zugeordnet werden in dessen Beleuchtungsbereich bzw. vordefinierten Bereich sich die Person befindet, oder
wobei die Körperdaten mehrerer Personen erfasst werden, wobei die Beleuchtungsinformationen der Beleuchtungsvorrichtung (3) jeweils den Körperdaten einer Person zugeordnet werden,
oder
wobei Köperdaten und Beleuchtungsinformationen verschiedener Personen und mehrerer Beleuchtungsvorrichtungen (3) erfasst und jeweils einander zugeordnet werden und an die Datensammeleinrichtung (2) übermittelt werden, wobei die Körperdaten einer Person den Beleuchtungsinformationen der Beleuchtungsvorrichtung (3) zugeordnet werden in dessen Beleuchtungsbereich bzw. vordefinierten Bereich sich die Person befindet.

4. Verfahren nach einem der Ansprüche 1-3,
wobei an die Datensammeleinrichtung (2) weitere Informationen der Person, bspw. Alter oder Geschlecht, übermittelt werden.

5. Verfahren nach einem der Ansprüche 1-4,
wobei es sich bei dem vordefinierten Bereich um einen Teilbereich des Beleuchtungsbereichs der Beleuchtungsvorrichtung (3), insbesondere einen Arbeitsplatz, handelt,
und/oder
wobei die Position der Person bestimmt wird, wobei die Bestimmung der Position der Person insbesondere dahingehend erfolgt, ob sich die Person innerhalb des Beleuchtungsbereichs bzw. vordefinierten Bereichs der Beleuchtungsvorrichtung (3) befindet,
wobei die Körperdaten bzw. die Körperdaten und die Beleuchtungsinformationen insbesondere nur dann erfasst werden wenn sich die Person innerhalb des Beleuchtungsbereichs bzw. vordefinierten Bereichs der Beleuchtungsvorrichtung (3) befindet.

6. System zur Steuerung einer Beleuchtungsvorrichtung (3), mit mindestens einer Beleuchtungsvorrichtung (3) und mindestens einem Mittel (1) zur Erfassung von Körperdaten einer im Beleuchtungsbereich oder in einem vordefinierten Bereich der Beleuchtungsvorrichtung (3) befindlichen Person, wobei die Beleuchtungsvorrichtung (3) dazu ausgebildet ist, Beleuchtungsinformationen über die von der Beleuchtungsvorrichtung (3) abgegebene Beleuchtung zu erfassen,
wobei die Beleuchtungsinformationen dazu ausgebildet sind, eine durch die Beleuchtungsvorrichtung erzeugte Beleuchtungssituation wiederzugeben,
und wobei die Beleuchtungsinformationen Dimmwerte und/oder Farbtemperaturwert sein können,
wobei es sich bei den Körperdaten um Daten handelt, welche derart beschaffen sind, eine physiologische Reaktion der Person auf ein abgegebenes Licht bzw. eine abgegebene Beleuchtung der Beleuchtungsvorrichtung darzustellen,
und wobei die Körperdaten Daten über den Puls, Blutdruck, Schweiß, und/oder Bewegungen, welche mittels MEMS-Gyroskope oder Beschleunigungssensoren ermittelt sind, der Person sind,
**dadurch gekennzeichnet,**
**dass** das System eine Datensammeleinrichtung (2) aufweist und dazu ausgebildet ist, die zu einem bestimmten, gleichen Zeitpunkt erfassten Köperdaten und Beleuchtungsinformationen einander zuzuordnen und an die Datensammeleinrichtung (2) zu übermitteln,
wobei die Datensammeleinrichtung (2) dazu ausgebildet ist, die einander zugeordneten Körperdaten und Beleuchtungsinformationen derart auszuwerten, dass sich Informationen über die Auswirkung der Beleuchtung der Beleuchtungsvorrichtung (3) auf das Wohlbefinden bzw. die Produktivität der Person ergeben,
und wobei die Datensammeleinrichtung (2) dazu ausgebildet ist, die Beleuchtungsvorrichtung (3) in Abhängigkeit der Informationen über die Auswirkung der Beleuchtung und/oder der erfassten Köperdaten zu steuern.

7. System nach Anspruch 6,
wobei das System mehrere Beleuchtungsvorrichtungen (3) und/oder mehrere Mittel (1) zur Erfassung von Körperdaten aufweist, wobei das System dazu ausgebildet ist, Köperdaten und Beleuchtungsinformationen verschiedener Personen und mehrerer Beleuchtungsvorrichtungen (3) zu erfassen und jeweils einander zuzuordnen und an die Datensammeleinrichtung (2) zu übermitteln, wobei die Körperdaten einer Person den Beleuchtungsinformationen der Beleuchtungsvorrichtung (3) zugeordnet werden in dessen Beleuchtungsbereich bzw. vordefinierten Bereich sich die Person befindet, wobei die Datensammeleinrichtung (2) insbesondere zentral in einem Gebäude bzw. Gebäudekomplex, bspw. in einer Zentrale eines größeren Beleuchtungssystems, oder im Internet, bspw. in einer Cloud oder auf einem Server eines Herstellers,
oder
lokal, bspw. in einem Smartphone, angeordnet ist.

8. System nach Anspruch 6,
wobei das System eine zentrale Steuervorrichtung aufweist, die zentral in einem Gebäude bzw. Gebäudekomplex, bspw. in einer Zentrale eines größeren Beleuchtungssystems, oder im Internet, bspw. in einer Cloud oder auf dem Server eines Herstellers, angeordnet ist, wobei die Datensammeleinrichtung (2) in der zentralen Steuervorrichtung angeordnet ist.

9. System nach einem der Ansprüche 6-8,
**dadurch gekennzeichnet,**
wobei das Mittel (1) zur Erfassung von Körperdaten eine Sensor-, Sende- und/oder Empfangseinheit zur Erfassung der Köperdaten aufweist, wobei die Sensor-, Sende- und/oder Empfangseinheit insbesondere in einem Activity Tracker, bspw. ein Armband oder eine Armbanduhr, oder in einer Smartwatch angeordnet ist,
wobei das System eine Empfangs- und Sendeeinheit (4) aufweist, wobei die Empfangs- und Sendeeinheit insbesondere in einem Smartphone angeordnet ist, wobei die Sensor-, Sende- und/oder Empfangseinheit dazu ausgebildet ist, die erfassten Köperdaten an die Empfangs- und Sendeeinheit (4) zu übermitteln, wobei die Empfangs- und Sendeeinheit dazu ausgebildet ist, die erfassten Körperdaten an die Datensammeleinrichtung (2) zu übermitteln.

10. System nach einem der Ansprüche 6, 7 und Anspruch 9,
wobei die Beleuchtungsvorrichtung (3) dazu ausgebildet ist, die Beleuchtungsinformationen an die Sensor-, Sende- und/oder Empfangseinheit bzw. die Empfangs- und Sendeeinheit zu übermitteln und die Sensor-, Sende- und/oder Empfangseinheit bzw. Empfangs- und Sendeeinheit dazu ausgebildet ist, die Beleuchtungsinformationen den Köperdaten zuzuordnen und die einander zugeordneten Köperdaten und Beleuchtungsinformationen an die Datensammeleinrichtung (2) bzw. über die Empfangs- und Sendeeinheit an die Datensammeleinrichtung (2) zu übermitteln,
oder
wobei die Beleuchtungsvorrichtung (3) dazu ausgebildet ist, die Beleuchtungsinformationen an die Datensammeleinrichtung (2) zu übermitteln, die Sensor-, Sende- und/oder Empfangseinheit bzw. die Empfangs- und Sendeeinheit dazu ausgebildet ist, die Köperdaten an die Datensammeleinrichtung (2) zu übermitteln und die Datensammeleinrichtung (2) dazu ausgebildet ist, die übermittelten Köperdaten den übermittelten Beleuchtungsinformationen zuzuordnen.

11. System nach einem der Ansprüche 6-10,
wobei das System Mittel zur Bestimmung der Position der Person aufweist, wobei die Bestimmung der Position der Person insbesondere dahingehend erfolgen kann, ob sich die Person innerhalb des Beleuchtungsbereichs bzw. vordefinierten Bereichs der Beleuchtungsvorrichtung (3) befindet,
wobei es sich bei den Mitteln zur Bestimmung der Position insbesondere um GPS-Mittel, RFID-Mittel, NFC-Mittel oder Bluetooth-Mittel handelt,
und wobei es sich bei dem vordefinierten Bereich insbesondere um einen Teilbereich des Beleuchtungsbereichs der Beleuchtungsvorrichtung (3), insbesondere einen Arbeitsplatz, handelt.

12. System nach Anspruch 11 und einem der Ansprüche 9, 10,
wobei die Mittel zur Bestimmung der Position in der oder zusammen mit der Sensor-, Sende- und/oder Empfangseinheit bzw. der Empfangs- und Sendeeinheit angeordnet sind.

## Claims

1. Method for controlling a lighting apparatus (3), in which
- lighting information about the lighting emitted by the lighting apparatus (3) and
- body data of a person located in the lighting region or in a predefined region of the lighting apparatus (3)
are recorded,
wherein the lighting information represents a lighting situation generated by the lighting apparatus,
and the lighting information can be dimming values
and/or color temperature values,
wherein the body data are data which are intended to represent a physiological reaction of the person to an emitted light or an emitted lighting of the lighting apparatus,
and wherein the body data are data about the person's pulse, blood pressure, sweat, and/or movements, which are determined via MEMS gyroscopes or acceleration sensors,
**characterized in that**
the body data and lighting information recorded at a specific, identical point in time are assigned to one other and transmitted to a data collection device (2),
wherein the body data and lighting information assigned to one another are evaluated in such a way that information is obtained about the effect of the lighting of the lighting apparatus (3) on the well-being or productivity of the person,
and wherein the lighting apparatus (3) is controlled depending on the information about the effect of the lighting and/or the recorded body data.

2. Method according to claim 1,
wherein body data and lighting information are recorded at a plurality of different points in time and are in each case assigned to each other and transmitted to the data collection device (2),
wherein the lighting apparatus (3) in each case emits different lighting, in particular at the different points in time.

3. Method according to either claim 1 or claim 2,
wherein a plurality of lighting apparatuses (3) are provided, wherein the body data of the person are assigned to the lighting information of the lighting apparatus (3), in the lighting region or predefined region of which the person is located,
or
wherein the body data of a plurality of persons are recorded, wherein the lighting information of the lighting apparatus (3) is in each case assigned to the body data of a person,
or
wherein body data and lighting information of different persons and a plurality of lighting apparatuses (3) are recorded and assigned to one another and transmitted to the data collection device (2), wherein the body data of a person are assigned to the lighting information of the lighting apparatus (3) in the lighting region or predefined region the person is located.

4. Method according to any of claims 1 to 3,
wherein further information about the person, e.g. age or gender, is transmitted to the data collection device (2).

5. Method according to any of claims 1 to 4,
wherein the predefined region is a partial region of the lighting region of the lighting apparatus (3), in particular a workstation,
and/or
wherein the position of the person is determined, wherein the determination of the position of the person is carried out in particular as to whether the person is within the lighting region or predefined region of the lighting apparatus (3),
wherein the body data or the body data and the lighting information are recorded in particular only when the person is within the lighting region or predefined region of the lighting apparatus (3).

6. System for controlling a lighting apparatus (3), comprising at least one lighting apparatus (3) and at least one means (1) for detecting body data of a person located in the lighting region or in a predefined region of the lighting apparatus (3), wherein the lighting apparatus (3) is designed to detect lighting information about the lighting emitted by the lighting apparatus (3),
wherein the lighting information is designed to reproduce a lighting situation generated by the lighting apparatus,
and wherein the lighting information may be dimming values and/or color temperature values,
wherein the body data are data which are intended to represent a physiological reaction of the person to an emitted light or an emitted lighting of the lighting apparatus,
and wherein the body data are data about the person's pulse, blood pressure, sweat, and/or movements, which are determined by MEMS gyroscopes or acceleration sensors,
**characterized in that**
the system has a data collection device (2) and is designed to assign the body data and lighting information, recorded at a specific, identical point in time, to one another, and to transmit them to the data collection device (2),
wherein the data collection device (2) is designed to evaluate the body data and lighting information assigned to one another in such a way that information is obtained about the effect of the lighting of the lighting apparatus (3) on the well-being or productivity of the person,
and wherein the data collection device (2) is designed to control the lighting apparatus (3) depending on the information about the effect of the lighting and/or the recorded body data.

7. System according to claim 6,
wherein the system has a plurality of lighting apparatuses (3) and/or a plurality of means (1) for recording body data, wherein the system is designed to record body data and lighting information of different persons and a plurality of lighting apparatuses (3) and to assign them to one another and to transmit them to the data collection device (2), wherein the body data of a person are assigned to the lighting information of the lighting apparatus (3) in the lighting region of which or predefined region the person is located, wherein the data collection device (2) is in particular centrally located in a building or building complex, for example in a headquarters of a larger lighting system, or on the Internet, for example in a cloud or on a server of a manufacturer,
or
is located locally, e.g. in a smartphone.

8. System according to claim 6,
wherein the system has a central controller which is arranged centrally in a building or building complex, for example in a control center of a larger lighting system, or on the Internet, for example in a cloud or on the server of a manufacturer, wherein the data collection device (2) is arranged in the central controller.

9. System according to any of claims 6 to 8,
**characterized in that**
the means (1) for recording body data comprises a sensor, transmitting and/or receiving unit for recording the body data, wherein the sensor, transmitting and/or receiving unit is arranged in particular in an activity tracker, e.g. a bracelet or a wristwatch, or in a smartwatch,
wherein the system has a receiving and transmitting unit (4), wherein the receiving and transmitting unit is arranged in particular in a smartphone, wherein the sensor, transmitting and/or receiving unit is designed to transmit the recorded body data to the receiving and transmitting unit (4), wherein the receiving and transmitting unit is designed to transmit the recorded body data to the data collection device (2).

10. System according to any of claim 6, claim 7 and claim 9,
wherein the lighting apparatus (3) is designed to transmit the lighting information to the sensor, transmitting and/or receiving unit or the receiving and transmitting unit and the sensor, transmitting and/or receiving unit or the receiving and transmitting unit is designed to assign the lighting information to the body data and to transmit the body data and lighting information assigned to one another to the data collection device (2) or via the receiving and transmitting unit to the data collection device (2),
or
wherein the lighting apparatus (3) is designed to transmit the lighting information to the data collection device (2), the sensor, transmitting and/or receiving unit or the receiving and transmitting unit is designed to transmit the body data to the data collection device (2), and the data collection device (2) is designed to assign the transmitted body data to the transmitted lighting information.

11. System according to any of claims 6 to 10,
wherein the system comprises means for determining the position of the person,
wherein the determination of the position of the person can be carried out in particular as to whether the person is within the lighting region or predefined region of the lighting apparatus (3),
wherein the means for determining the position are in particular GPS means, RFID means, NFC means or Bluetooth means,
and wherein the predefined region is in particular a partial region of the lighting region of the lighting apparatus (3), in particular a workstation.

12. System according to claim 11 and either claim 9 or claim 10,
wherein the means for determining the position are arranged in or together with the sensor, transmitting and/or receiving unit or the receiving and transmitting unit.

## Revendications

1. Procédé pour la commande d'un dispositif d'éclairage (3), dans lequel
- des informations d'éclairage concernant l'éclairage émis par le dispositif d'éclairage (3) et
- des données corporelles d'une personne se trouvant dans la zone d'éclairage ou dans une zone prédéfinie du dispositif d'éclairage (3)
sont détectées,
dans lequel les informations d'éclairage reproduisent une situation d'éclairage générée par le dispositif d'éclairage,
et dans lequel les informations d'éclairage peuvent être des valeurs de variation de lumière
et/ou des valeurs de température de couleur,
dans lequel les données corporelles sont des données qui sont fournies pour représenter une réponse physiologique de la personne à une lumière émise ou à un éclairage émis du dispositif d'éclairage,
et dans lequel les données corporelles sont des données concernant le pouls, la pression sanguine, la transpiration et/ou les mouvements, lesquelles sont définies par des gyroscopes MEMS ou des capteurs d'accélération, de la personne,
**caractérisé en ce**
**que** les données corporelles et les informations d'éclairage détectées à un même moment déterminé sont associées les unes aux autres et sont transmises à un appareil de collecte de données (2),
dans lequel les données corporelles et les informations d'éclairage associées les unes aux autres sont évaluées de telle sorte qu'il en résulte des informations concernant l'effet de l'éclairage du dispositif d'éclairage (3) sur le bien-être ou la productivité de la personne,
et dans lequel le dispositif d'éclairage (3) est commandé en fonction des informations concernant l'effet de l'éclairage et/ou des données corporelles détectées.

2. Procédé selon la revendication 1,
dans lequel, à plusieurs moments différents, des données corporelles et des informations d'éclairage sont détectées et respectivement associées les unes aux autres et transmises à l'appareil de collecte de données (2),
dans lequel le dispositif d'éclairage (3) émet en particulier respectivement un éclairage différent aux différents moments.

3. Procédé selon l'une des revendications 1 à 2,
dans lequel plusieurs dispositifs d'éclairage (3) sont présents, dans lequel les données corporelles de la personne sont associées aux informations d'éclairage du dispositif d'éclairage (3) dans la zone d'éclairage ou la zone prédéfinie dans laquelle se trouve la personne,
ou
dans lequel les données corporelles de plusieurs personnes sont détectées, dans lequel les informations d'éclairage du dispositif d'éclairage (3) sont respectivement associées aux données corporelles d'une personne,
ou
dans lequel des données corporelles et des informations d'éclairage de différentes personnes et de plusieurs dispositifs d'éclairage (3) sont détectées et respectivement associées les unes aux autres et transmises à l'appareil de collecte de données (2), dans lequel les données corporelles d'une personne sont associées aux informations d'éclairage du dispositif d'éclairage (3) dans la zone d'éclairage ou la zone prédéfinie dans laquelle se trouve la personne.

4. Procédé selon l'une des revendications 1 à 3,
dans lequel d'autres informations de la personne, par exemple l'âge ou le sexe, sont transmises à l'appareil de collecte de données (2).

5. Procédé selon l'une des revendications 1 à 4,
dans lequel la zone prédéfinie est une zone partielle de la zone d'éclairage du dispositif d'éclairage (3), en particulier un poste de travail,
et/ou
dans lequel la position de la personne est déterminée, dans lequel la détermination de la position de la personne est effectuée en particulier en fonction du fait que la personne se trouve ou non à l'intérieur de la zone d'éclairage ou de la zone prédéfinie du dispositif d'éclairage (3),
dans lequel les données corporelles ou les données corporelles et les informations d'éclairage ne sont en particulier détectées que lorsque la personne se trouve dans la zone d'éclairage ou la zone prédéfinie du dispositif d'éclairage (3).

6. Système pour la commande d'un dispositif d'éclairage (3), comportant au moins un dispositif d'éclairage (3) et au moins un moyen (1) pour la détection de données corporelles d'une personne se trouvant dans la zone d'éclairage ou dans une zone prédéfinie du dispositif d'éclairage (3), dans lequel le dispositif d'éclairage (3) est configuré pour détecter des informations d'éclairage concernant l'éclairage émis par le dispositif d'éclairage (3),
dans lequel les informations d'éclairage sont configurées pour reproduire une situation d'éclairage générée par le dispositif d'éclairage,
et dans lequel les informations d'éclairage peuvent être des valeurs de variation de lumière et/ou des valeurs de température de couleur,
dans lequel les données corporelles sont des données qui sont fournies pour représenter une réponse physiologique de la personne à une lumière émise ou à un éclairage émis du dispositif d'éclairage,
et dans lequel les données corporelles sont des données concernant le pouls, la pression sanguine, la transpiration et/ou les mouvements, lesquelles sont définies au moyen de gyroscopes MEMS ou de capteurs d'accélération, de la personne,
**caractérisé en ce**
**que** le système présente un appareil de collecte de données (2) et est configuré pour associer les unes aux autres les données corporelles et les informations d'éclairage détectées à un même moment déterminé et pour les transmettre à l'appareil de collecte de données (2),
dans lequel l'appareil de collecte de données (2) est configuré pour évaluer les données corporelles et les informations d'éclairage associées les unes aux autres de telle sorte qu'il en résulte des informations concernant l'effet de l'éclairage du dispositif d'éclairage (3) sur le bien-être ou la productivité de la personne,
et dans lequel l'appareil de collecte de données (2) est configuré pour commander le dispositif d'éclairage (3) en fonction des informations concernant l'effet de l'éclairage et/ou des données corporelles détectées.

7. Système selon la revendication 6,
dans lequel le système présente plusieurs dispositifs d'éclairage (3) et/ou plusieurs moyens (1) pour la détection de données corporelles, dans lequel le système est configuré pour détecter des données corporelles et des informations d'éclairage de différentes personnes et de plusieurs dispositifs d'éclairage (3) et pour les associer respectivement les unes aux autres et pour les transmettre à l'appareil de collecte de données (2), dans lequel les données corporelles d'une personne sont associées aux informations d'éclairage du dispositif d'éclairage (3) dans la zone d'éclairage ou la zone prédéfinie dans laquelle se trouve la personne, dans lequel l'appareil de collecte de données (2) est disposé en particulier de manière centrale dans un bâtiment ou un complexe de bâtiments, par exemple dans un centre d'un système d'éclairage plus grand, ou sur Internet, par exemple dans un nuage informatique ou sur un serveur d'un fabricant,
ou
localement, par exemple dans un mobile multifonction.

8. Système selon la revendication 6,
dans lequel le système présente un dispositif de commande central qui est disposé de manière centrale dans un bâtiment ou un complexe de bâtiments, par exemple dans un centre d'un système d'éclairage plus grand, ou sur Internet, par exemple dans un nuage informatique ou sur le serveur d'un fabricant, dans lequel l'appareil de collecte de données (2) est disposé dans le dispositif de commande central.

9. Système selon l'une des revendications 6 à 8,
**caractérisé en ce**
dans lequel le moyen (1) pour la détection de données corporelles présente une unité formant capteur, d'émission et/ou de réception pour la détection des données corporelles, dans lequel l'unité formant capteur, d'émission et/ou de réception est disposée en particulier dans un moniteur d'activité, par exemple un bracelet ou une montre-bracelet, ou dans une montre intelligente,
dans lequel le système présente une unité de réception et d'émission (4), dans lequel l'unité de réception et d'émission est disposée en particulier dans un mobile multifonction, dans lequel l'unité formant capteur, d'émission et/ou de réception est configurée pour transmettre les données corporelles détectées à l'unité de réception et d'émission (4), dans lequel l'unité de réception et d'émission est configurée pour transmettre les données corporelles détectées à l'appareil de collecte de données (2).

10. Système selon l'une des revendications 6, 7 et la revendication 9,
dans lequel le dispositif d'éclairage (3) est configuré pour transmettre les informations d'éclairage à l'unité formant capteur, d'émission et/ou de réception ou à l'unité de réception et d'émission, et l'unité formant capteur, d'émission et/ou de réception ou l'unité de réception et d'émission est configurée pour associer les informations d'éclairage aux données corporelles et pour transmettre les données corporelles et les informations d'éclairage associées les unes aux autres à l'appareil de collecte de données (2) ou, par l'intermédiaire de l'unité de réception et d'émission, à l'appareil de collecte de données (2),
ou
dans lequel le dispositif d'éclairage (3) est configuré pour transmettre les informations d'éclairage à l'appareil de collecte de données (2), l'unité formant capteur, d'émission et/ou de réception ou l'unité de réception et d'émission est configurée pour transmettre les données corporelles à l'appareil de collecte de données (2) et l'appareil de collecte de données (2) est configuré pour associer les données corporelles transmises aux informations d'éclairage transmises.

11. Système selon l'une des revendications 6 à 10,
dans lequel le système présente des moyens pour la détermination de la position de la personne,
dans lequel la détermination de la position de la personne peut être effectuée en particulier en fonction du fait que la personne se trouve ou non à l'intérieur de la zone d'éclairage ou de la zone prédéfinie du dispositif d'éclairage (3),
dans lequel les moyens pour la détermination de la position sont en particulier des moyens GPS, des moyens RFID, des moyens NFC ou des moyens Bluetooth,
et dans lequel la zone prédéfinie est en particulier une zone partielle de la zone d'éclairage du dispositif d'éclairage (3), en particulier un poste de travail.

12. Système selon la revendication 11 et l'une des revendications 9, 10,
dans lequel les moyens pour la détermination de la position sont disposés dans l'unité formant capteur, d'émission et/ou de réception ou l'unité de réception et d'émission ou conjointement avec celle-ci.
